Europäisches Patentamt

European Patent Office

Office européen des brevets

(19)

(11) Publication number:
**0 393 748**
**A2**

# EUROPEAN PATENT APPLICATION

(12)

(21) Application number: 90200869.7

(22) Date of filing: **10.04.90**

(51) Int. Cl.5: **C07F 5/04, C10M 139/00**

(30) Priority: **18.04.89 IT 2019089**

(43) Date of publication of application:
**24.10.90 Bulletin 90/43**

(84) Designated Contracting States:
**AT BE CH DE DK ES FR GB GR LI LU NL SE**

(71) Applicant: **PRESIDENZA DEL CONSIGLIO DEI MINISTRI UFFICIO DEL MINISTRO PER IL COORDINAMENTO DELLE INIZIATIVE PER LA RICERCA SCIENTIFICA E TECNOLOGICA Lungotevere Thaon di Revel No. 76**
**I-00196 Rome(IT)**

(72) Inventor: **Colombo, Edilberto,**
**Via Malacrida 4**
**I-20040 Aicurzio, Milan,(IT)**

(74) Representative: **Roggero, Sergio et al**
**Ing. Barzanò & Zanardo Milano S.p.A. Via Borgonuovo 10**
**I-20121 Milano(IT)**

(54) **Rust-preventive and corrosion-combating additives for lubricating oils, and lubricant compositions containing same.**

(57) Boric acid esters of N-(2-hydroxyethyl)-amides, or of N,N-bis(2-hydroxyethyl)-amides of C12-C22 saturated or unsaturated fatty acids are useful as friction modifiers, rust-preventing- and corrosion-combating additives for lubricant oils.
Lubricant compositions containing such additives are also described.

EP 0 393 748 A2

This invention relates to novel compounds useful as rust-preventing and corrosion-combating additives and as friction modifiers for lubricants, and the lubricant compositions containing the novel additives.

More particularly, primary subject matter of this invention are the esters of boric acid with N-(2-hydroxyethyl)amides, or N,N-bis(2-hydroxyethyl)amides of C12-C22 saturated or unsaturated fatty acids.

Such novel compounds are useful as additives for lubricants, to which they impart rust-preventing and corrosion-combating properties, as well as friction-modifying properties.

More particularly, their practical application is in the field of the lubrication of gears, especially the lubrication of change gears and differential gearings. A number of classes of rust-preventing and corrosion combating additives are known, and the relevant compounds possess the most diversified structures while having in common the property of sticking to metallic surfaces to form a barrier between the surfaces to be protected and the aggressive agents.

Among these compounds, there are variously substituted monobasic and dibasic carboxylic acids, derivatives of alkenylsuccinic acids and derivatives of imidazolines.

The novel class of additives found by Applicants has a rust-preventing and a corrosion-combating activity which is higher than those of the compounds referred to above, and is obtained by reacting C12-C22 saturated or unsaturated fatty acids with monoethanolamine or diethanolamine, and subsequently reacting the resultant amide with boric acid.

The fatty acids to be used in the synthesis in question preferably contain from 16 to 22 carbon atoms, and they can be either saturated or unsaturated: dodecanoic (or lauric) acid, tetradecanoic (myristic) acid, hexadecanoic (palmitic) acid, octadecanoic (stearic) acid, 16-methyl-heptadecanoic (isostearic) acid, 9-octadecenoic (oleic) acid, (9,12)-octadecadienoic (linoleic) acid, and (9,12,15)-octadecatrienoic (linolenic) acid belong to this class of compounds: 9-octadecenoic acid, 16-methyl-heptadecanoic acid and octadecanoic acid are preferably employed.

The synthesis of these novel rust preventives consists in causing a fatty acid to react with monoethanolamine, or diethanolamine, in equimolecular amounts, in the dry state, at a temperature of from $140°C$ to $170°C$, for a time of from 6h to 10h, the as-formed water being distilled off.

Preferably, the reaction is carried out at a temperature of from $150°C$ to $155°C$ during 8h.

The reaction has a quantitative yield and the resultant amide is caused to react with $H_3BO_3$ in a molar ratio of from 1,5 to 0,9, the preferred molar ratio being 1 in the case of the N,N-bis(2-hydroxyethyl)-amides, and being from 3 to 1 in the case of the N-(2-hydroxyethyl)amides.

The reaction requires a reaction time of from 3h to 6h, at the solvent refluxing temperature.

The solvent is a member selected from the group consisting of benzene, toluene and the xylenes. The as-formed water is azeotropically distilled off on completion of the reaction, and the cooled solution is filtered and the solvent evaporated off.

By way of example, if the boric acid ester of the N-(2hydroxyethyl)-9-octadeceneamide is to be prepared, 400,0 g of 9-octadecenoic acid are caused to react with 86,5 g of monoethanolamine, the reaction temperature being $150°C$.

The reaction mass is held at such a temperature during 8h until collecting 26 ml of water (N = 4,3%). 50 g of the resultant amide are dissolved in 50 ml of toluene, whereafter the solution is supplemented with 3,1 g of $H_3BO_3$.

The solution now obtained is refluxed during 4h, and 2,6 ml of water are collected.

The solution is allowed to cool and filtered, and toluene is distilled off.

The product thus obtained analyzes:

B = 1,1% ; N = 4,2%

These novel compounds can be employed as rust-preventing and corrosion-combating additives, and as friction modifiers as well, for a number of various lubricant compositions.

The concentration of such additives in the lubricant compositions referred to just now, is usually from 0,1% to 1,0%, and preferably from 0,2% to 0,5%.

In these formulations, the novel compounds in question are stable to hydrolysis, fairly soluble and capable of giving solutions having a long storage life.

Another aspect of the present invention is represented, therefore, by lubricant blends having the following typical formulation pattern:

    1) A mineral base, or

    2) A synthetic base, such as polyolefins or carbonic acid esters or carboxylic acid esters, or

    3) A blend of 1 and 2;

    4) From 3,0% to 7,0% of a sulphurized olefin, as an EP additive;

    5) From 0,3% to 2,0% of a phosphorus-nitrogen complex having wear-resistant properties;

    6) From 0,3% to 2,0% of a sulphur-phosphorus compound possessing antioxidant and wear-resistant properties;

7) From nil to 0,7% of a friction modifier;

8) From 0,01% to 0,2% of a metal-deactivator;

9) From 0,1% to 1,0% of a boric acid ester of an N-(2-hydroxyethyl)-fatty acid amide, or of an N,N-bis(2-hydroxyethyl)-fatty acid amide.

The rust-preventing and corrosion-combating activity of the boric esters taught by the present invention has been assessed by testing them in accordance with the ASTM D665 Standards.

The latter tests consists in keeping a steel sample immersed in a mixture composed of:

A) 300 ml of oil plus 30 ml of $H_2O$, or

B) 300 ml of oil and 30 ml of synthetic sea water, during 24h at 60° C.

On completion of the test the intensity of the attack undergone by the metal surface is evaluated.

For example, if an SN450 mineral oil as such, on the one hand, and supplemented with the boric acid ester of the N,N-bis(2-hydroxyethyl)-9-octadeceneamide, on the other hand, the following results are obtained:

| Additive | Concentration | Test A | Test B |
|----------|---------------|--------|--------|
| None     |               | fail   | fail   |
| (I)      | 1,0%          | pass   | pass   |
| (I)      | 0,3%          | pass   | pass   |
| (I)      | 0,1%          | pass   | pass   |

More specifically, the (I) additive has been obtained by causing 282,5 g of 9-octadecenoic acid to react with 105,0 g of diethanolamine, in the dry state, at a temperature of from 150° C to 155° C.

The reaction mass is kept at the temperature referred to above for 8h, while concurrently distilling off 18,0 g of water (N = 3,8%).

100 g of the thus prepared amide are dissolved in 100 ml of toluene, and this solution is supplemented with 16,7 g of boric acid. The resultant solution is refluxed during 4 h and 9 ml of water are azeotropically distilled off.

The solution is allowed to cool, filtered and toluene is distilled off.

A viscous, glossy yellow liquid product is obtained, which analyzes:

B = 2,7% ; N = 3,5%

The rust-preventing and corrosion-combating activities of the boric acid esters prepared according to this invention has then been compared with that of conventional additives, by subjecting lubricant compositions which contained both types of additives to the CRC L-33 test (described in "Laboratory Performance Tests for Automotive Gear Lubricants - STP512A - ASTM).

In such a test, a change gearbox is tested, mounted on a test bench, and which is charged with the lubricant formulation concerned, together with a certain volume of distilled water: the gearbox is driven by an electric motor during 4h and attains an internal temperature of 80° C. As the run is over, the electric motor is disconnected and the gearbox is held stationary for 7 days at 50° C.

By so doing, severe service conditions are reproduced. At the end of the test, the gearbox is overhauled and the conditions as to rust, formation of sludges and other deposits are assessed.

More specifically, the ensuing tabulations show, in comparison with the data relative to lubricant compositions which contain conventional rust-preventers such as the methyl hemiester of the tetradecenylsuccinic acid, together with the corresponding biacid and heptadecyl imidazoline, the results as obtained by subjecting to the CRC L-33 test aforementioned a lubricant composition supplemented with the boric acid ester of the N,N-bis(2-hydroxyethyl)-9-octadeceneamide (I).

The lubricant blend used for testing is composed of a synthetic base consisting of polyolefins and carbonic esters, which has been supplemented with:

| Sulphurized isobutene | 6,0% |
| Ashless dithiophosphate | 0,7% |
| Amine phosphate | 0,7% |
| Alkyl hemiester of an alkenylsuccinic acid | 0,3% |
| A derivative of the Dimercaptothiadiazole | 0,2% |

To this blend, the 0,5% of the compound (I) has been added, and the resultant formulation (composition A) has been compared, in the CRC L-33 test aforementioned, with a like blend, but supplemented, instead, with the 0,5% of a nonboric amide as obtained by reaction of the pentadecanoic acid with 2-dodecylamino-propylamine (Composition B).

The respective results are tabulated below.

| | RUST LEVEL | NOTES |
| --- | --- | --- |
| COMPOSITION A | 1 | |
| COMPOSITION B | 10 | formation of dark blotches |

wherein:

0 = no traces of rust;

1 = not more than 6 blotches, each having 1 mm diameter or less;

2 = Higher than 1 and up to 1% of the surface considered;

5. = Moderate effect- More intense than 2 and up to 5% of the surface considered;

10 = Severe effect - Blotches occupying more than 5% of the surface considered.

The surface which has been considered here is 3,23 cm². If the composition B is supplemented with 0,5% of a conventional rust- and corrosion preventer, such as the blend of the methyl hemiester of the tetradecenylsuccinic acid with the corresponding biacid in the ratio of 60:40 (Composition C), or the heptadecylimidazoline (Composition D), high rust levels are always obtained.

| | RUST LEVEL | NOTES |
| --- | --- | --- |
| COMPOSITION C | 11 | formation of dark blotches |
| COMPOSITION D | 6 | ditto |

The data tabulated above thus clearly show that a lubricant supplemented with boric acid esters of N-(2-hydroxyethyl)-fatty acid amides, or of N,N-bis(2-hydroxyethyl 1-fatty acid amides considerably improves the resistance to rust formation and to corrosion of metal surfaces, as compared with the conventional additives.

The activity of the compounds of this invention as friction modifiers, instead, has been assessed with the SRV and the LVFA tests.

The SRV test employs a testing machinery in which two test-samples, one being the upper sample, and the other the lower sample, are pressed against one another by a force applied perpendicularly to them, and oscillably displaced in the tangential direction at either a fixed or a variable frequency, in such a way that it becomes possible to produce in their contact zone a well defined frictional force.

The contact zone may be, at choice, a point, a line, or a surface, according to whether the upper sample is a sphere, a hollow or a solid cylinder having a planar front face ("Antriebstechnik", 19, Nos. 1-2 (1980)).

The characteristics of the test and the relevant testing conditions are:

Material of the test-sample 10 Cr 6

Lower test-sample cylinder 24 mm dia. by 7,85mm

Upper test-sample Sphere 10 mm dia.

Load 200 N

Oscillation frequency 50 Hz
Test duration 2h
Temperature 50° C
Oscillation amplitude 1000 μm

If an SN450 mineral oil, supplemented with 1,0% of the boric acid ester of N,N-bis(2-hydroxyethyl)-9-octadeceneamide (I), is subjected to the test outlined above, the wear of the spherical test-sample corresponds to a wear imprint of 0,498 mm diameter, and to a friction coefficient of 0,086.

Should a like test be performed under the same conditions on an SN450 mineral oil, either as such, or supplemented with 1,0% of N,N-bis(2-hydroxyethyl)-9-octadeceneamide (II), it would be impossible, in both cases, to assess the width of the imprint, due to jam of the two test-samples with one another.

The influence of the additives of this invention on friction has been assessed also by carrying out the LVFA test.

Said LVFA test employs a testing machinery composed of a motorized variator which drives to rotation a shaft integral with an upper test-sample, and a container which holds both the lubricant and a second test-sample. The container is urged upwardly by a pneumatic ram, so that the two test-samples immersed in the lubricant bath contact one another and are pressed against one another. The contact surface is an annulus (Lubr.Eng., 17, 110, (1961)).

The test is carried out under a load of 12,246 kg at a temperature of 100° C, by driving to rotation the upper test-sample at a speed which varies from nil to 950 RPM and then returns to zero.

The results which have been obtained are tabulated below and are referred to an SN450 mineral oil as such supplemented with 1,0% of N,N-bis(2hydroxyethyl)-9-octadeceneamide (II), or supplemented with 1,0% of the boric acid ester of N,N-bis(2hydroxyethyl)-9-octadeceneamide (I)

| ADDITIVE | RPM | SLIDING SPEED | FRICTION COEFFICIENT |
|---|---|---|---|
| None | 180 | 0,2 m/s | 0,095 |
| (II) | 180 | 0,2 | 0,088 |
| (II) | 370 | 0,4 | 0,076 |
| (I) | 180 | 0,2 | 0,059 |
| (I) | 370 | 0,4 | 0,052 |

These results are a clear evidence of the property of the compounds of this invention of lowering the friction coefficient.

This property is not seen in the corresponding amides which were not esterified with boric acid.

This drop of the friction coefficient is such as to determine a lesser heat build-up during the gear run. The temperature of the lubricant when the engine is running should not therefore attain so high values as to bring about decompositions or an exceedingly high variation of the viscosity of the lubricant concerned. In summation, it has become possible, thanks to the compounds of this invention, to save power by lowering the friction coefficient of the lubricant concerned.

## Claims

1. Boric acid esters of N-(2-hydroxyethyl) amides, or of N,N-bis(2-hydroxyethyl) amides of C12-C22 saturated or unsaturated fatty acids.

2. Esters according to claim 1, characterized in that they are prepared by causing a C12-C22 saturated or unsaturated fatty acid to react with monoethanolamine, or diethanolamine, the resultant product being then caused to react with boric acid.

3. Esters according to claims 1 or 2, wherein the fatty acids are selected from the group consisting of: dodecanoic acid, tetradecanoic acid, hexadecanoic acid, 16-methyl-heptadecanoic acid, octadecanoic acid, 9-octadecenoic acid, 9,12-octadecadienoic acid, and 9,12, 15-octadecatrienoic acid.

4. Esters according to claim 1 or 2, wherein the preferred fatty acids are: 9-octadecenoic acid, octadecanoic acid, and 16-methyl-heptadecanoic acid.

5. Process for preparing esters according to any of clams 1 to 4, comprising a first step in which a C12-C22 saturated or unsaturated fatty acid is caused to react with monoethanolamine, or diethanolamine, at a temperature of from 140° C to 170° C, preferably at 150° C, for a time of from 6h to 10h, preferably 8h, the resultant product being caused to react, in the second step, with boric acid for a time of from 3h to 6h at the refluxing temperature of the solvent concerned, the latter being selected from the group consisting of benzene, toluene and the xylenes.

6. Process according to claim 5, wherein, in the second reaction step, the molar ratio of the amide to the boric acid is from 1,5 to 0,9, preferably 1, in the case of the N,N-bis(2-hydroxyethyl) -amides, and is from 3 and 1 in the case of the N-(2-hydroxyethyl)-amides.

7. A lubricant composition characterized in that it consists of:

    a) a mineral base, or

    b) a synthetic base, or

    c) a blend of a) and b);

    d) from 0,3% to 7,0% of a sulphurized olefin as the EP additive;

    e) from 0,3% to 2,0% of a phosphorus-nitrogen compound having wear-resisting activity;

    f) from 0,3% to 2,0% of a sulphur-phosphorus compound having both a wear-resisting and an antioxidant activity;

    g) from nil to 0,7% of a friction modifier;

    h) from 0,01% to 0,2% of a metal-deactivator, and

    i) from 0,1% to 1,0% of a boric acid ester of a N-(2-hydroxyethyl)-fatty acid amide, or of an N,N-bis-(2-hydroxyethyl) fatty acid amide, as defined in any of claims 1 to 4.

8. Lubricant composition according to claim 7, wherein the content of the boric acid ester of an N-(2-hydroxyethyl)-fatty acid amide, or of an N,N-bis(2-hydroxyethyl)-fatty acid amide, is from 0,2% to 0,5%.

9. Lubricant composition according to claim 7, characterized in that it consists of a synthetic base composed of olefins and carbonic acid esters which has been supplemented with:

| | |
|---|---|
| Sulphurized isobutene | 6,0% |
| Ashless dithiophosphate | 0,7% |
| Amine phosphate | 0,7% |
| An alkyl hemiester of an alkenylsuccinic acid | 0,3% |
| A derivative of dimercaptothiadiazole | 0,2% |
| The boric acid ester of the N,N-bis(2-hydroxyethyl)-9-octadecenamide | 0,5% |

10. Use of the esters as defined in claim 1 as rust-preventing and corrosion-combating additives for lubricant oils.

11. Use of the esters as defined in claim 1 as friction modifiers for lubricant oils.